# EUROPEAN PATENT SPECIFICATION

(11) **EP 3 554 983 B1**
(45) Date of publication and mention of the grant of the patent: **23.09.2020**
(21) Application number: 17787670.3
(22) Date of filing: 17.10.2017
(51) Int. Cl.: B66C 1/58, B66C 1/68, B66C 13/46, B66C 23/08, B66F 9/065, A01G 23/00

(54) **A WORKING VEHICLE INCLUDING A CRANE**
ARBEITSFAHRZEUG MIT EINEM KRAN
VÉHICULE DE TRAVAIL COMPRENANT UNE GRUE

(30) Priority: 14.12.2016 SE 1651640
(43) Date of publication of application: 23.10.2019
(73) Proprietor: Cargotec Patenter AB, 341 81 Ljungby (SE)
(72) Inventor: GUSTAFSSON, Per, 824 42 Hudiksvall (SE); SIRÉN, Sten, 21600 Pargas (FI)
(74) Representative: Bjerkéns Patentbyrå KB (Stockholm)
(86) International application number: PCT/SE2017/051020
(87) International publication number: WO 2018/111169

(56) References cited:
- EP-A1- 0 397 076
- EP-A1- 2 939 529

## Description

### Technical field

The present disclosure relates to a working vehicle including a crane provided with a crane tip tool arranged at a tip end of the crane. The crane tip tool may be a fork on a forklift vehicle.

### Background

When using a loader crane to pick and place pallets and similar goods, a lifting tool, e.g. a fork, is mounted at the crane tip. The maneuvering of the fork requires a skilled driver as movement requires that the driver can control many functions on the crane simultaneously. When applying a "normal sequence" when picking up a pallet, the fork must first be placed in line with the holes in the pallet. Then the fork is maneuvered onto the holes in the pallet by maneuvering the crane tip with suitable functions (2-3) and simultaneously rotating the fork. This means that driver must be able to maneuver 3-4 functions simultaneously to make a smooth pick and/or place. This requires high skill of the driver.

Below some prior art documents will be briefly discussed.
EP-2987399 relates to a system and a method for controlling a tool pivotally mounted to an articulated boom connected to a work vehicle having a control unit. The method comprises determining the direction of a predetermined point of the boom or the tool is moving to (i.e. the moving direction) and controlling orientation of the tool as a function of one or several predetermined dependencies. The predetermined dependencies defining at least the orientation of the tool in relation to the moving direction.

WO-2014/118430 relates to a method and a system for controlling a crane by using boom tip control, the crane having at least two articulated booms. The method controls the speed and direction of the crane tip such that the speed of different booms are determined automatically depending on a number of criteria. US-2005/216105 relates to a working vehicle in form of a telehandler including a crane formed by an extendible boom having a workhead/crane tip tool arranged at a distal crane tip end, and attached to the crane via a controllable pivot point/tool joint. A controller is configured to control the mode of operation of the crane in dependence of an input command from an operator, so that the crane may be operated in a conventional polar coordinate mode of operation and in an orthogonal coordinate mode of operation. The origin of movement in the polar coordinate mode is in relation to the base of the crane. As discussed above, moving the crane tip tool (e.g. the fork) along a linear path between an initial position to a target position is a difficult task in that the operator must control movements of various parts of the crane and at the same time manoeuvre the crane tip tool to move along the linear path.

A work vehicle according to the preamble of claim 1 is known from EP 0 397 076 A1.

The object of the working vehicle disclosed herein is to achieve an improved control capability enabling a straight-forward and more user-friendly control of the final movement of the crane tool.

### Summary

The above-mentioned object is achieved by the present invention according to the independent claim.

Preferred embodiments are set forth in the dependent claims.

According to an aspect, the present invention relates to a working vehicle including a crane with at least one extendible boom and/or at least one articulation joint, the crane comprises a crane tip tool, e.g. a fork, arranged at a distal crane tip end, and attached to the crane via a controllable tool joint. The movements of the boom(s) and/or the articulation joint(s) of the crane and of the crane tip tool are controlled by control signals generated by a crane control unit in dependence of operator inputs received by at least one manoeuvre member.

The crane is configured to be operated in a normal mode of operation and in a tip tool mode of operation, and that the crane control unit is configured to control the mode of operation of the crane in dependence of a mode control signal.
In the normal mode of operation, crane movements are controlled in relation to a coordinate system having a base of the crane as its origin.
The working vehicle comprises a sensor system capable of detecting when the tip tool is in a mode change position. When the tip tool is in the mode change position it should be controlled in the tip tool mode, and the sensor system is configured to generate a mode change indication signal when the tip tool is in said mode change position, and wherein said mode control signal is manually or automatically generated in dependence of said mode change indication signal.

In the tip tool mode of operation, crane movements are controlled in relation to a coordinate system having said tool joint as its origin. When the crane is in the tip tool mode the tip tool is controlled in response of an operator input via one of the manoeuvre members.

Thus, the crane is equipped with a crane tip control as suggested herein, and thereby the control will be enhanced of the tip tool and the tool joint, e.g. the fork and its rotator, such that even an unexperienced user may load and unload pallets and similar goods. The position of the tip tool when a mode change should be done is thus detected which is advantageous in order to achieve a seam-less mode change.

In the tip tool mode the tip tool may be controlled to move along a linear path from an initial point to a target point in response of user input via the manoeuvre member. During the linear movement it is often necessary that the crane is moved to facilitate the linear movement. The crane movement may include that one or many joints of the crane may change angles, one or many boom sections of the crane are lengthened or shortened, and/or the crane base is rotated. The crane control unit is configured to control these movements such that the linear path movement of the tip tool is enabled/facilitated.

The applied coordinate system may be e.g. a Cartesian coordinate system, a polar coordinate system, or cylindrical and spherical coordinate systems.
By changing the origin for the coordinate system from the base of the crane to the crane tip tool movement point, the movement of the tip tool along the linear path from the initial point to the target point may easily be performed by user manipulation of one of the manoeuvre members.

### Brief description of the drawings

Figures 1 and 2 are schematic block diagrams illustrating a working vehicle according to two embodiments of the present invention.
Figures 3 and 4 are views from above of embodiments of the invention illustrating two positions of the tip tool where the tip tool is a fork.
Figure 5 is a schematic block diagram illustrating a working vehicle according to embodiments of the present invention.

### Detailed description

The working vehicle will now be described in detail with references to the appended figures. Throughout the figures the same, or similar, items have the same reference signs. Moreover, the items and the figures are not necessarily to scale, emphasis instead being placed upon illustrating the principles of the invention.

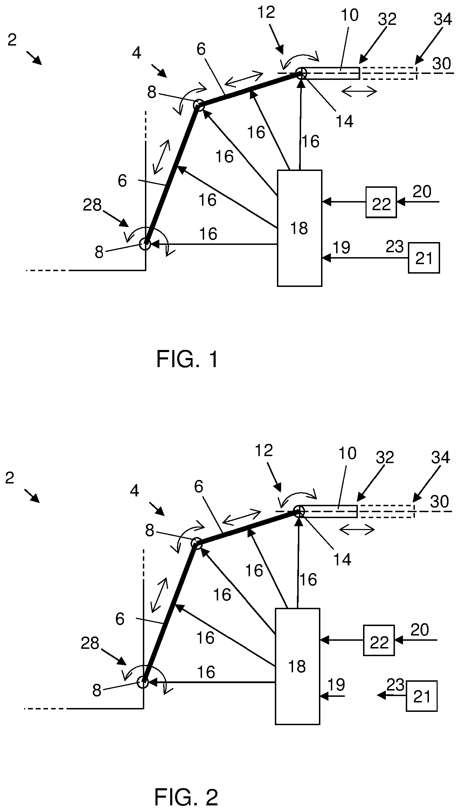

With references to figures 1-5 the working vehicle 2 is shown including a crane 4 with at least one extendible boom 6 and/or at least one articulation joint 8. The working vehicle may be a forklift vehicle, a forestry vehicle, or any other vehicle provided with a crane. The crane comprises a crane tip tool 10 arranged at a distal crane tip end 12, and attached to the crane via a controllable tool joint 14. The type of joint applied as the tool joint 14 is dependent on the type of tool. Many different types of joints is therefore applicable. It may e.g.be a fixed joint providing movement only in one plane, or a joint enabling movements in two dimensions, or a rotator joint.

According to one embodiment the tip tool 10 is a fork.
According to another embodiment the tip tool 10 is e.g. a harvester head, a felling head, or a log grapple.

The movements of the boom(s) and/or the articulation joint(s) of the crane and of the crane tip tool are controlled by control signals 16 generated by a crane control unit 18 in dependence of operator inputs 20 received by at least one manoeuvre member 22. The manoeuvre member 22 may be e.g. a joystick.

The crane 4 is configured to be operated in a normal mode of operation and in a tip tool mode of operation. Within the scope of invention as defined by the claims, the crane may be operated in further modes of operation.

The working vehicle comprises a sensor system 21 capable of detecting when the tip tool is in a mode change position wherein it should be controlled in a tip tool mode. The sensor system 21 is configured to generate a mode change indication signal 23 when the tip tool 10 is in the mode change position. The mode control signal 19 is generated in dependence of the mode change indication signal 23, either manually or automatically.

In a first embodiment, illustrated in figure 1, the mode control signal 19 is automatically generated, i.e. the mode indication signal 23 is applied to the crane control unit 18. In addition a visual, audible or tactile signal may be generated by the sensor system 21 in order to indicate to an operator that a mode change will be performed.

According to a second embodiment, illustrated in figure 2, the mode change indication signal 23 is one or many of a visual, audible or tactile signal and the mode control signal 23 is then manually generated by an operator, preferably via a button, a touch screen, or a motion sensitive device that may sense and identify a specified user motion to change the mode of operation.

Thus, the sensor system 21 should be capable of detecting when the tip tool is in a mode change position. The mode change position is defined in dependence of the type of tip tool the crane is provided with. If, for example, the tip tool 10 is a fork the mode change position is defined as an optimal position for the fork to be inserted to lift a pallet. And if the tip tool is a log grapple the mode change position is the position where the grapple is in an optimal position in relation to a log.

The sensor system comprises at least one camera, and/or at least one sensor arranged at said crane or at the vehicle. In one variation, the at least one camera is arranged at the crane close to the tip. The sensors may include length sensors and/or angle sensors arranged to detect boom extensions and the angles between booms of the crane. Thereby, the position of the tip tool may be determined.

The mode change position may be regarded as a position within a three-dimensional volume in relation to the tip tool where the tip tool mode is a more advantageous operational mode then the normal mode. The sensor system is provided with processing capacity and provided with a storage where a set of tip tool identification data may be stored. This tip tool identification data may include various image data representing e.g. an optimal position in relation to a pallet, or a log.

Herein, the present invention is exemplified by a mode change from a normal mode of operation to a tip tool mode of operation. It should be noted that the invention is equally applicable when a mode change from the tip tool mode to the normal mode is performed. Thus, in that situation a second mode change indication signal is generated when the tip tool not any longer is in a mode change position, and then a mode change is performed, either manually or automatically.

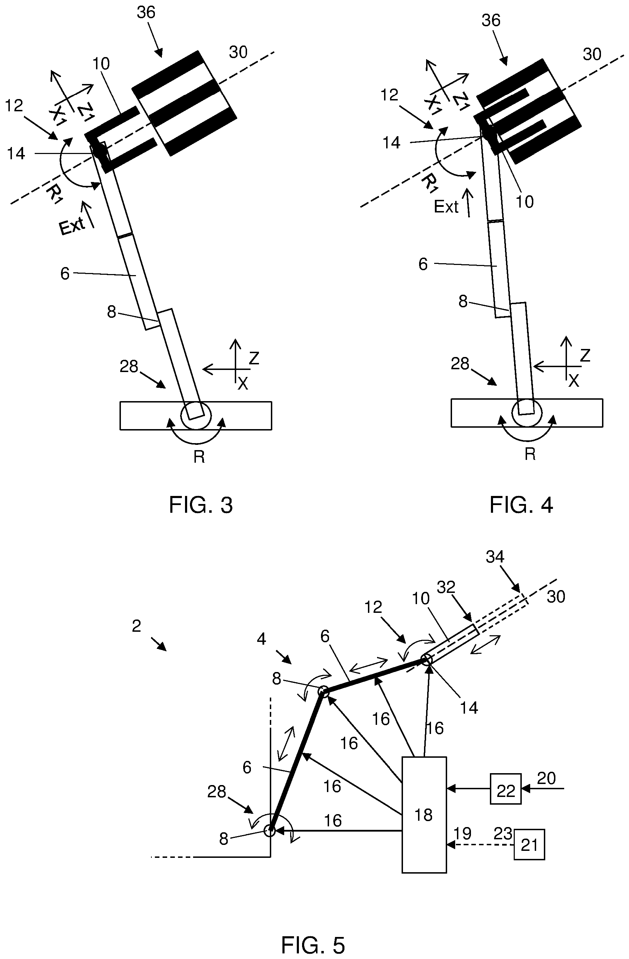

When in the normal mode of operation, crane movements are controlled in relation to a coordinate system having a base 28 of the crane as its origin. This is schematically illustrated by the coordinate systems shown in figures 3 and 4 close to the base 28 of the crane.

When the control unit is in the tip tool mode of operation, crane movements are controlled in relation to a coordinate system having the tool joint 14 as its origin. This is schematically illustrated by the coordinate systems shown in figures 3 and 4 close to the crane tip end 12. In those figures the movement of the tool joint is represented by a double-arrow R₁. The movement of the joint close to the base of the crane is represented by a double-arrow R.

By changing mode of operation the functionality of the at least one manoeuvre member 22 may be changed, i.e. the same manoeuvre member 22 may control one type of movement in the normal mode, and another type of movement in the tip tool mode.

In the tip tool mode of operation the tip tool 10 may be controlled to move along a straight linear path 30 from an initial point 32 to a target point 34 in response of an operator input 20 via one of said manoeuvre members 22.

When the crane tip tool 10 is in the initial point 32 the crane tip tool 10 is controlled to be in an initial position having an orientation enabling movement of the tip tool along the straight linear path 30 from the initial point 32 to the target point 34.
In a typical situation the crane is manoeuvred such that the crane tip tool is in an initial point before it is linearly moved to a target point. One common example is when the crane tip tool is a fork. The initial position is then when the fork legs are in a correct position and have a correct orientation for moving the fork linearly such that the fork legs may be smoothly inserted into the receiving openings of a pallet 36 (see figures 3 and 4) to be picked up. In figures 1 and 2 the crane tip tool in the target point is illustrated as a dashed rectangle. In figure 3 the crane tip tool, i.e. the fork, is in its initial point, and in figure 4 the fork is in its target point.

More in detail, the control unit 18 is configured to control movements of various parts of the crane 4, i.e. booms and/or joints and/or tool joint, to enable and perform movement of the tip tool 10 along the straight linear path 30. Preferably, crane movement in the tip tool mode include that one or many joints of the crane may change angles, one or many boom sections of the crane are lengthened or shortened, and/or the crane base is rotated.

In one embodiment the straight linear movement of the tip tool 10 is in a horizontal plane. This is illustrated in figures 1 and 2.

According to another embodiment the straight linear movement of the tip tool 10 is in a plane inclined in relation to a horizontal plane. This is schematically illustrated in figure 5.
In one variation of this embodiment the crane is equipped with a tiltable fork. This embodiment opens up the possibility to pick and unpick a pallet which is on a slope, i.e. it facilitates also movements in the Y plane. In this case the fork not only has a "pure" horizontal movement, but it may also follow the path in the Y plane pointed out by the inclination of the fork with respect to a horizontal plane.

The coordinate system may be e.g. a Cartesian coordinate system, a polar coordinate system, or cylindrical and spherical coordinate systems. One coordinate system may be applied when in the normal mode of operation, e.g. a Cartesian coordinate system, and another when working in the tip tool mode of operation, e.g. an inclined Cartesian coordinate system or a spherical coordinate system.

By changing the origin for the coordinate system from the base of the crane to the crane tip tool movement point the movement of the tip tool along the linear path from the initial point to the target point may easily be performed by one user manipulation of the manoeuvre member.

The present invention provides for an enhancement of a crane tip control to help the user to pick and place pallets and similar goods with a fork or similar at the crane tip.
First the user places the crane tip and the fork in a correct position for start picking a pallet by using the "normal" X-R (or X-Z) coordinate system functionality, having the base of the crane as coordinate system origin.
When a mode change indication signal is generated the mode of the crane control unit is manually or automatically changed and the crane tip tool and the tool joint, e.g. a rotator, follows the new path according X1. In figures 3 and 4 are illustrated an example where the system rotates the crane (R), extends the boom (Ext) and rotates the Rotator (R1) when moving into the pallet.

As described above one or more manoeuvre members, e.g. joysticks, or other control devices, at the operator's station may be used by an operator to move the crane, e.g. the boom, the crane tip, and the tool towards a target point. The manoeuvre members and control devices may be operably connected with the crane control unit of the working vehicle and located e.g. in the cabin or on the frame of the vehicle. A display may be connected to the control unit for showing information and data to the operator. The control unit is operably connected with various actuators associated with the boom and other components of the working vehicle. Control signals from the manoeuvre members and the control devices are communicated to the control unit, and the control unit is operable to responsively control the various actuators to rotate the boom, move and change the position of the boom and the tool, rotate the tool and operate the tool for performing work or grabbing with the arms of the tool.
The crane control unit may be a programmable micro-processor-based device with a memory device and associated computer program code, for generating control signals to responsively control the various actuators. The computer program code may be in a form of a control program or a control algorithm, or appropriate computer software, running or being executed under the control of the control unit. The associated computer program code may be embodied on a computer readable medium. The control unit may have a distributed configuration with several subunits communicating with each other's.
The actuators may be motors or cylinder actuators utilizing hydraulic energy and pressurized medium which is transmitted to the actuator by e.g. lines and flexible hoses. An apparatus for generating the hydraulic energy is placed in e.g. the frame or is operatively connected to the engine of the working vehicle. Hydraulic energy is distributed e.g. in the form of pressurized medium to the actuators via a control circuit provided with necessary valves and components for controlling the flow of the pressurized medium. Some actuators may utilize electric energy stored in an accumulator or generated with a generator operatively connected to the engine. The control circuit is controlled based on control signals from the control unit under the control of the operator or by an automatic control of the control unit.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A working vehicle (2) including a crane (4) with at least one extendible boom (6) and/or at least one articulation joint (8), the crane comprises a crane tip tool (10) arranged at a distal crane tip end (12), and attached to the crane via a controllable tool joint (14), the movements of the boom(s) and/or the articulation joint(s) of the crane and of the crane tip tool are controlled by control signals (16) generated by a crane control unit (18) in dependence of operator inputs (20) received by at least one manoeuvre member (22),
wherein the crane (4) is configured to be operated in a normal mode of operation and in a tip tool mode of operation, and that the crane control unit (18) is configured to control the mode of operation of the crane in dependence of a mode control signal (19),
**characterised in that** the working vehicle comprises a sensor system (21) capable of detecting when the tip tool is in a mode change position wherein it should be controlled in a tip tool mode, and the sensor system (21) is configured to generate a mode change indication signal (23) when the tip tool (10) is in said mode change position, and wherein said mode control signal (19) is generated in dependence of said mode change indication signal (23),
wherein in the normal mode, crane movements are controlled in relation to a coordinate system having a base (28) of the crane as its origin,
wherein in the tip tool mode, crane movements are controlled in relation to a coordinate system having said tool joint (14) as its origin,
and wherein in the tip tool mode the tip tool (10) is controlled in response of an operator input (20) via one of said manoeuvre members (22).

2. The vehicle according to claim 1, wherein said mode change indication signal is one or many of a visual, audible or tactile signal.

3. The vehicle according to claim 1 or 2, wherein said mode control signal (23) is manually generated by an operator, preferably via a button, a touch screen, or a motion sensitive device.

4. The vehicle according to claim 1, wherein said mode control signal (19) is automatically generated.

5. The vehicle according to any of claims 1-4, wherein said sensor system (21) comprises at least one camera, and/or at least one sensor arranged at said crane or at the vehicle.

6. The working vehicle (2) according to any of claims 1-5, wherein in an initial point (32) the crane tip tool (10) is controlled to be in an initial position having an orientation enabling movement of the tip tool along a straight linear path (30) from the initial point (32) to a target point (34).

7. The working vehicle (2) according to any of claims 1-6, wherein the crane control unit (18) is configured to control movements of various parts of the crane (4) to enable and perform movement of the tip tool (10) along a straight linear path (30).

8. The working vehicle (2) according to claim 7, wherein said straight linear movement of the tip tool (10) is in a horizontal plane.

9. The working vehicle (2) according to claim 7, wherein said straight linear movement of the tip tool (10) is in a plane inclined in relation to a horizontal plane.

10. The working vehicle (2) according to any of claims 1-9, wherein the manoeuver member (22) is a joystick.

11. The working vehicle (2) according to any of claims 1-10, wherein the tip tool (10) is a fork.

12. The working vehicle (2) according to claim 11, wherein the mode change position is defined as an optimal position for the fork to be inserted to lift a pallet.

13. The working vehicle (2) according to any of claims 1-11, wherein the tip tool (10) is a harvester head, a felling head, or a log grapple.

14. The working vehicle (2) according to any of claims 1-12, wherein the sensor system is configured to generate a second mode change indication signal when the tip tool (10) not any longer is in said mode change position.

## Patentansprüche

1. Arbeitsfahrzeug (2) mit einem Kran (4) mit mindestens einem ausfahrbaren Ausleger (6) und/oder mindestens einem Drehgelenk (8), wobei der Kran ein Kranspitzenwerkzeug (10) umfasst, das an einem distalen Kranspitzenende (12) angeordnet ist und über ein steuerbares Werkzeuggelenk (14) an dem Kran befestigt ist, wobei die Bewegungen des/der Ausleger(s) und/oder des/der Drehgelenke(s) des Krans und des Kranspitzenwerkzeugs durch Steuersignale (16) gesteuert werden, die durch eine Kransteuereinheit (18) in Abhängigkeit von Bedienereingaben (20), die durch mindestens ein Manövrierelement (22) empfangen werden, erzeugt werden,
wobei
der Kran (4) dazu ausgestaltet ist, in einem normalen Betriebsmodus und in einem Spitzenwerkzeugbetriebsmodus betrieben zu werden, und die Kransteuereinheit (18) dazu ausgestaltet ist, den Betriebsmodus des Krans in Abhängigkeit von einem Modussteuersignal (19) zu steuern,
**dadurch gekennzeichnet, dass**
das Arbeitsfahrzeug ein Sensorsystem (21) umfasst, das dazu fähig ist zu detektieren, wenn das Spitzenwerkzeug sich in einer Moduswechselposition befindet, in der es in einem Spitzenwerkzeugmodus gesteuert werden sollte, und das Sensorsystem (21) dazu ausgestaltet ist, ein Moduswechselhinweissignal (23) zu erzeugen, wenn das Spitzenwerkzeug (10) sich in der Moduswechselposition befindet, und wobei das Modussteuersignal (19) in Abhängigkeit von dem Moduswechselhinweissignal (23) erzeugt wird,
wobei in dem normalen Modus Kranbewegungen bezogen auf ein Koordinatensystem, das eine Basis (28) des Krans als seinen Ursprung aufweist, gesteuert werden,
und wobei in dem Spitzenwerkzeugmodus Kranbewegungen bezogen auf ein Koordinatensystem, welches das Werkzeuggelenk (14) als seinen Ursprung aufweist, gesteuert werden,
und wobei in dem Spitzenwerkzeugmodus das Spitzenwerkzeug (10) in Reaktion auf eine Bedienereingabe (20) über eines der Manövrierelemente (22) gesteuert wird.

2. Fahrzeug nach Anspruch 1, wobei das Moduswechselhinweissignal eines oder mehrere aus einem visuellen, akustischen oder haptischen Signal ist.

3. Fahrzeug nach Anspruch 1 oder 2, wobei das Modussteuersignal (23) manuell durch einen Bediener erzeugt wird, vorzugsweise über einen Knopf, einen Berührungsbildschirm oder eine bewegungsempfindliche Vorrichtung.

4. Fahrzeug nach Anspruch 1, wobei das Modulsteuersignal (19) automatisch erzeugt wird.

5. Fahrzeug nach einem der Ansprüche 1-4, wobei das Sensorsystem (21) mindestens eine Kamera und/oder mindestens einen Sensor, der an dem Kran oder an dem Fahrzeug angeordnet ist, umfasst.

6. Arbeitsfahrzeug (2) nach einem der Ansprüche 1-5, wobei an einem Anfangspunkt (32) das Kranspitzenwerkzeug (10) so gesteuert wird, dass es sich in einer Anfangsposition befindet, die eine Ausrichtung aufweist, die eine Bewegung des Spitzenwerkzeugs entlang eines geraden linearen Wegs (30) von dem Anfangspunkt (32) zu einem Zielpunkt (34) ermöglicht.

7. Arbeitsfahrzeug (2) nach einem der Ansprüche 1-6, wobei die Kransteuereinheit (18) dazu ausgestaltet ist, Bewegungen von verschiedenen Teilen des Krans (4) zu steuern, um eine Bewegung des Spitzenwerkzeugs (10) entlang eines geraden linearen Wegs (30) zu ermöglichen und auszuführen.

8. Arbeitsfahrzeug (2) nach Anspruch 7, wobei die gerade lineare Bewegung des Spitzenwerkzeugs (10) in einer horizontalen Ebene stattfindet.

9. Arbeitsfahrzeug (2) nach Anspruch 7, wobei die gerade lineare Bewegung des Spitzenwerkzeugs (10) in einer Ebene stattfindet, die relativ zu einer horizontalen Ebene geneigt ist.

10. Arbeitsfahrzeug (2) nach einem der Ansprüche 1-9, wobei das Manövrierelement (22) ein Joystick ist.

11. Arbeitsfahrzeug (2) nach einem der Ansprüche 1-10, wobei das Spitzenwerkzeug (10) eine Gabel ist.

12. Arbeitsfahrzeug (2) nach Anspruch 11, wobei die Moduswechselposition als optimale Position zum Einführen der Gabel zum Anheben einer Palette definiert ist.

13. Arbeitsfahrzeug (2) nach einem der Ansprüche 1-11, wobei das Spitzenwerkzeug (10) ein Erntevorsatz, ein Fällkopf oder eine Holzrückezange ist.

14. Arbeitsfahrzeug (2) nach einem der Ansprüche 1-12, wobei das Sensorsystem dazu ausgestaltet ist, ein zweites Moduswechselhinweissignal zu erzeugen, wenn das Spitzenwerkzeug (10) sich nicht mehr in der Moduswechselposition befindet.

## Revendications

1. Véhicule de travail (2) comprenant une grue (4) avec au moins une flèche extensible (6) et/ou au moins un joint d'articulation (8), la grue comprend un outil de pointe de grue (10) agencé à une extrémité distale de pointe de grue (12) et fixé à la grue via un joint d'outil pouvant être commandé (14), les déplacements de la ou des flèches et/ou du ou des joints d'articulation de la grue et de l'outil de pointe de grue sont commandés par des signaux de commande (16) générés par une unité de commande de grue (18) en fonction d'entrées d'opérateur (20) reçues par au moins un élément de manœuvre (22), dans lequel
la grue (4) est configurée pour fonctionner dans un mode de fonctionnement normal et dans un mode de fonctionnement d'outil de pointe, et l'unité de commande de grue (18) est configurée pour commander le mode de fonctionnement de la grue en fonction d'un signal de commande de mode (19),
**caractérisé en ce que**
le véhicule de travail comprend un système de capteur (21) capable de détecter lorsque l'outil de pointe est dans une position de changement de mode où il doit être commandé dans un mode d'outil de pointe, et le système de capteur (21) est configuré pour générer un signal d'indication de changement de mode (23) lorsque l'outil de pointe (10) est dans ladite position de changement de mode, et dans lequel ledit signal de commande de mode (19) est généré en fonction dudit signal d'indication de changement de mode (23),
dans lequel dans le mode normal, les déplacements de grue sont commandés par rapport à un système de coordonnées ayant une base (28) de la grue comme origine,
dans lequel en mode outil de pointe, les déplacements de grue sont commandés par rapport à un système de coordonnées ayant ledit joint d'outil (14) comme origine, et dans lequel dans le mode d'outil de pointe, l'outil de pointe (10) est commandé en réponse à une entrée d'opérateur (20) via l'un desdits éléments de manœuvre (22).

2. Véhicule selon la revendication 1, dans lequel ledit signal d'indication de changement de mode est un ou plusieurs parmi un signal visuel, sonore ou tactile.

3. Véhicule selon la revendication 1 ou 2, dans lequel ledit signal de commande de mode (23) est généré manuellement par un opérateur, de préférence via un bouton, un écran tactile ou un dispositif sensible à un mouvement.

4. Véhicule selon la revendication 1, dans lequel ledit signal de commande de mode (19) est généré automatiquement.

5. Véhicule selon l'une quelconque des revendications 1 à 4, dans lequel ledit système de capteur (21) comprend au moins une caméra et/ou au moins un capteur agencé sur ladite grue ou sur le véhicule.

6. Véhicule de travail (2) selon l'une quelconque des revendications 1 à 5, dans lequel en un point initial (32), l'outil de pointe de grue (10) est commandé pour être dans une position initiale ayant une orientation permettant un déplacement de l'outil de pointe le long d'un trajet linéaire rectiligne (30) allant du point initial (32) à un point cible (34) .

7. Véhicule de travail (2) selon l'une quelconque des revendications 1 à 6, dans lequel l'unité de commande de grue (18) est configurée pour commander les déplacements de diverses parties de la grue (4) pour permettre et effectuer un déplacement de l'outil de pointe (10) le long une trajectoire linéaire rectiligne (30).

8. Véhicule (2) selon la revendication 7, dans lequel ledit déplacement linéaire rectiligne de l'outil de pointe (10) est dans un plan horizontal.

9. Véhicule de travail (2) selon la revendication 7, dans lequel ledit déplacement linéaire rectiligne de l'outil de pointe (10) est dans un plan incliné par rapport à un plan horizontal.

10. Véhicule de travail (2) selon l'une quelconque des revendications 1 à 9, dans lequel l'élément de manœuvre (22) est un levier de commande.

11. Véhicule de travail (2) selon l'une quelconque des revendications 1 à 10, dans lequel l'outil de pointe (10) est une fourche.

12. Véhicule de travail (2) selon la revendication 11, dans lequel la position de changement de mode est définie comme une position optimum pour la fourche à insérer pour soulever une palette.

13. Véhicule de travail (2) selon l'une quelconque des revendications 1 à 11, dans lequel l'outil de pointe (10) est une tête d'abattage-ébranchage, une tête d'abattage ou une pince à grumes.

14. Véhicule de travail (2) selon l'une quelconque des revendications 1 à 12, dans lequel le système de capteur est configuré pour générer un second signal d'indication de changement de mode lorsque l'outil de pointe (10) n'est plus dans ladite position de changement de mode.
